# EUROPÄISCHE PATENTANMELDUNG

(11) **EP 2 688 186 A1**
(43) Veröffentlichungstag der Anmeldung: **22.01.2014**
(21) Anmeldenummer: 12177285.9
(22) Anmeldetag: 20.07.2012
(51) Int. Cl.: H02K 11/00

(54) **Motor-Geber-System**

(71) Anmelder: Siemens Aktiengesellschaft, 80333 München (DE)
(72) Erfinder: Eckert, Rainer, 97616 Bad Neustadt / Herschfeld (DE); Schimmer, Jürgen, 90473 Nürnberg (DE)

(57) **Zusammenfassung**

Ein Motor-Geber-System mit einem Motor (1, 20) und einem Geber zum Erfassen einer Drehzahl, eines Drehwinkels oder einer Position eines gegenüber einem feststehenden Motorteil verstellbaren Motorteils soll vereinfacht werden. Hierzu ist vorgesehen, dass der Geber ein Gebergehäuse (7, 23), in dem eine Lichtquelle (7A, 23A) und ein Lichtempfänger (7B, 23B) angeordnet sind, und einen Codeträger (10, 25) mit einer Codespur umfasst, wobei das verstellbare Motorteil als Codeträger (10, 25) mit der Codespur ausgebildet ist oder den Codeträger (10, 25) mit der Codespur trägt. Dadurch kann beispielsweise eine Codescheibe des Gebers als separates Bauteil innerhalb des Gebergehäuses (7, 23) eingespart werden.

## Beschreibung

Die Erfindung betrifft ein Motor-Geber-System mit einem Motor, der wenigstens ein feststehendes Motorteil und wenigstens ein relativ zu dem feststehenden Motorteil verstellbares Motorteil umfasst, und mit einem Geber, der eine Lichtquelle, einen Codeträger mit einer Codespur und einen Lichtempfänger aufweist.

Ein Motor umfasst wenigstens ein feststehendes Motorteil, z.B. einen Ständer, und wenigstens ein relativ zu dem feststehenden Motorteil verstellbares, insbesondere um eine Achse rotierendes Motorteil, z.B. einen Läufer. Um bei einem Motor eine Drehzahl oder eine Position des verstellbaren Motorteils gegenüber dem feststehenden Motorteil zu erfassen, ist die Verwendung von Gebern, insbesondere Dreh- oder Positionsgebern, bekannt. Bekannte Geber umfassen als Baueinheit in einem Gebergehäuse eine Lichtquelle, die einen Lichtstrahl in Richtung eines Codeträgers mit einer Codespur aussendet, wobei ein durch die Codespur veränderter, insbesondere gebeugter Lichtstrahl auf einen Lichtempfänger des Gebers trifft und anhand einer Auswertung des von dem Lichtempfänger empfangenen Signals eine Position, ein Drehwinkel oder eine Drehzahl bezüglich des verstellbaren Motorteils ermittelbar ist. Hierfür ist der Geber und insbesondere der drehbar gelagerte Codeträger mit der Motorwelle verbunden, so dass die Rotation der Motorwelle zu einer Rotation des Codeträgers führt.

Aus der Offenlegungsschrift WO 2005/071363 A1 ist ein Drehgeber mit einem Drehgebergehäuse bekannt, in dem eine Lichtquelle, eine drehbar auf einer Welle gelagerte Codescheibe und ein Lichtempfänger angeordnet sind, wobei die Codescheibe mit einer Codespur versehen ist.

Aufgabe der vorliegenden Erfindung ist es, ein gegenüber bekannten Motor-Geber-Systemen einfacher aufgebautes Motor-Geber-System zu schaffen.

Diese Aufgabe wird durch ein Motor-Geber-System mit den Merkmalen gemäß Patentanspruch 1 gelöst.

Der Erfindung liegt die Erkenntnis zugrunde, dass der Platzbedarf für bekannte Geber hauptsächlich durch den Codeträger, insbesondere die Codescheibe, bestimmt wird. Der Geber könnte wesentlich kleiner und kostengünstiger gebaut werden, wenn dieses Bauteil im Gebergehäuse entfallen würde. Demgemäß sieht die Erfindung vor, dass die Codespur entweder direkt auf ein ohnehin vorhandenes, verstellbares Motorteil aufgebracht wird, womit dieses Motorteil gleichsam zum Codeträger und damit zu einem Teil des Gebers wird, oder dass der Codeträger mit der Codespur an dem verstellbaren Motorteil befestigt ist und dieses somit den Codeträger trägt. Der Codeträger mit der Codespur, der auch Teil des Gebers ist, befindet sich somit außerhalb des Gebergehäuses. Der verbleibende Teil des Gebers kann dadurch ohne eigenen Codeträger innerhalb des Gebergehäuses entsprechend kleiner und kostengünstiger ausgebildet werden.

Bei einem Motor mit einem rotierenden Läufer kommen mehrere Bauteile in Betracht, die als verstellbares Motorteil entweder direkt den Codeträger mit der Codespur bilden oder an denen der Codeträger mit der Codespur befestigt wird.

Eine erste Ausführungsform der Erfindung sieht vor, dass wenigstens ein Läuferblech entweder direkt als Codeträger ausgebildet ist und die Codespur trägt oder dass ein insbesondere scheibenförmiger Codeträger an dem Läuferblech befestigt ist.

Eine weitere Ausführungsform der Erfindung sieht vor, dass eine Läuferendscheibe entweder direkt als Codeträger ausgebildet ist und die Codespur trägt oder dass ein insbesondere scheibenförmiger Codeträger an der Läuferendscheibe befestigt ist.

Eine weitere Ausführungsform der Erfindung sieht vor, dass eine Läufer-Schwungmasse entweder direkt als Codeträger ausgebildet ist und die Codespur trägt oder dass ein insbesondere scheibenförmiger Codeträger an der Läufer-Schwungmasse befestigt ist.

Eine weitere Ausführungsform der Erfindung sieht vor, dass ein Kugellagerinnenring eines Kugellagers zur Lagerung des Läufers des Motors entweder direkt als Codeträger ausgebildet ist und die Codespur trägt oder dass ein insbesondere scheibenförmiger Codeträger an dem Kugellagerinnenring befestigt ist.

Eine weitere Ausführungsform der Erfindung sieht vor, dass eine Hohlwelle des Motors entweder direkt als Codeträger ausgebildet ist und die Codespur trägt oder dass ein insbesondere scheibenförmiger Codeträger an der Hohlwelle befestigt ist.

Vorteilhaft ist bei den genannten Ausführungsformen der Geber als Drehgeber und insbesondere diffraktiver Geber ausgebildet, durch den neben einer Drehzahl auch eine absolute Winkelposition erfassbar ist.

Ebenso wie bei einem Rotationsmotor lässt sich die Erfindung auch bei einem Linearmotor anwenden, bei dem vorzugsweise der Ständer entweder direkt als Codeträger mit der Codespur für den Positionsgeber ausgebildet ist oder bei dem der Codeträger mit der Codespur an dem Ständer befestigt ist. Der verbleibende Teil des Gebers ist dann an dem Läufer des Linearmotors befestigt.

Die Erfindung wird nachfolgend anhand von Ausführungsbeispielen näher erläutert. Es zeigen:
- FIG 1: ein Motor-Geber-System mit einem mit einer Codespur versehenen Läuferblechpaket,
- FIG 2: ein Motor-Geber-System mit einer mit einer Codespur versehenen Läuferendscheibe,
- FIG 3: ein Motor-Geber-System mit einer mit einer Codespur versehenen Läufer-Schwungmasse,
- FIG 4: ein Motor-Geber-System mit einem mit einer Codespur versehenen Kugellagerinnenring,
- FIG 5: ein Motor-Geber-System mit einer mit einer Codespur versehenen Stirnseite einer Hohlwelle,
- FIG 6: ein Motor-Geber-System mit einem mit einer Codespur versehenen Stator eines Linearmotors.

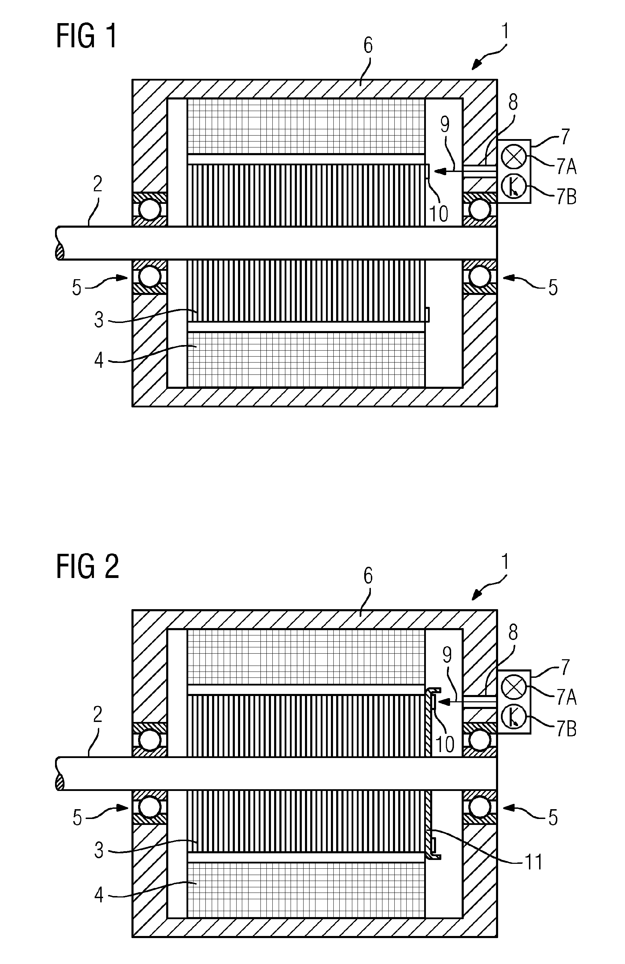

FIG 1 zeigt einen Rotationsmotor 1 im vereinfachten Schnittbild. Daraus ersichtlich ist ein Läufer mit einer Welle 2 und einem mit dieser verbundenen Läuferblechpaket 3. Die Welle 2 ist durch Kugellager 5 drehbar gelagert. Ferner umfasst der Motor 1 einen Stator 4, der vorzugsweise die Erregerwicklungen umfasst. Das Läuferblechpaket 3 und der Stator 4 sind in einem Motorgehäuse 6 angeordnet. Der Motor 1 bildet zusammen mit einem Drehgeber ein Motor-Geber-System. Dabei sind in einem Gebergehäuse 7 eine Lichtquelle 7A, insbesondere ein Laser, sowie ein Lichtempfänger 7B untergebracht. Um die Winkellage des Läufers gegenüber dem Ständer 4 zu erkennen, ist an dem Läuferblechpaket 3 ein Codeträger 10 angebracht, der mit einer Codespur versehen ist. Das von der Lichtquelle 7A erzeugte Licht gelangt durch eine Gehäuseöffnung 8 in dem Motorgehäuse 6 durch das Motorgehäuse 6 und trifft auf den Codeträger 10 mit der Codespur. In Abhängigkeit von der aktuellen Lage des Läufers wird das auf den Codeträger 10 treffende Licht 9 unterschiedlich gebeugt und reflektiert. Das reflektierte Licht gelangt schließlich durch die Gehäuseöffnung 8 zurück in das Gebergehäuse 7 und wird dort von dem Lichtempfänger 7B aufgenommen. Anhand des empfangenen Lichtes kann dann auf die aktuelle Winkellage des Läufers des Motors 1 geschlossen werden.

Das Läuferblechpaket 3 übernimmt damit im Ausführungsbeispiel neben seiner elektrischen Funktion im Motor 1 auch die Funktion des Codeträgers für den Geber. Auf eine sonst notwendige zusätzliche Codierscheibe in dem Gebergehäuse 7 kann somit verzichtet werden.

Alternativ ist es auch möglich, dass die Codespur direkt an dem Läuferblechpaket 3 angebracht wird. Dazu werden vorteilhaft hierfür erforderliche transparente, absorbierende, beugende oder reflektierende Schichtungen anstatt auf eine Codescheibe direkt auf das Läuferpaket aufgebracht. Das Läuferblechpaket 3 übernimmt somit - neben seiner elektromagnetischen Funktion im Motor - auch die Funktion des Codeträgers.

Ein weiters Ausführungsbeispiel der Erfindung zeigt FIG 2. Dabei sind nachfolgend gleiche Bauteile des Motors im Vergleich zu FIG 1 mit den gleichen Bezugszeichen versehen. Auf eine erneute Beschreibung der bezeichneten Bauteile wird daher verzichtet.

Im Unterschied zu FIG 1 umfasst der Motor 1 gemäß FIG 2 eine Läuferendscheibe 11. Gemäß dem Ausführungsbeispiel ist an der Läuferendscheibe 11 ein Codeträger 10 angebracht, der mit einer Codespur versehen ist.

Alternativ ist es auch möglich, dass die Codespur direkt an der Läuferendscheibe 11 angebracht wird. Die Läuferendscheibe 11 übernimmt somit - neben ihrer üblichen Funktion im Motor - auch die Funktion des Codeträgers.

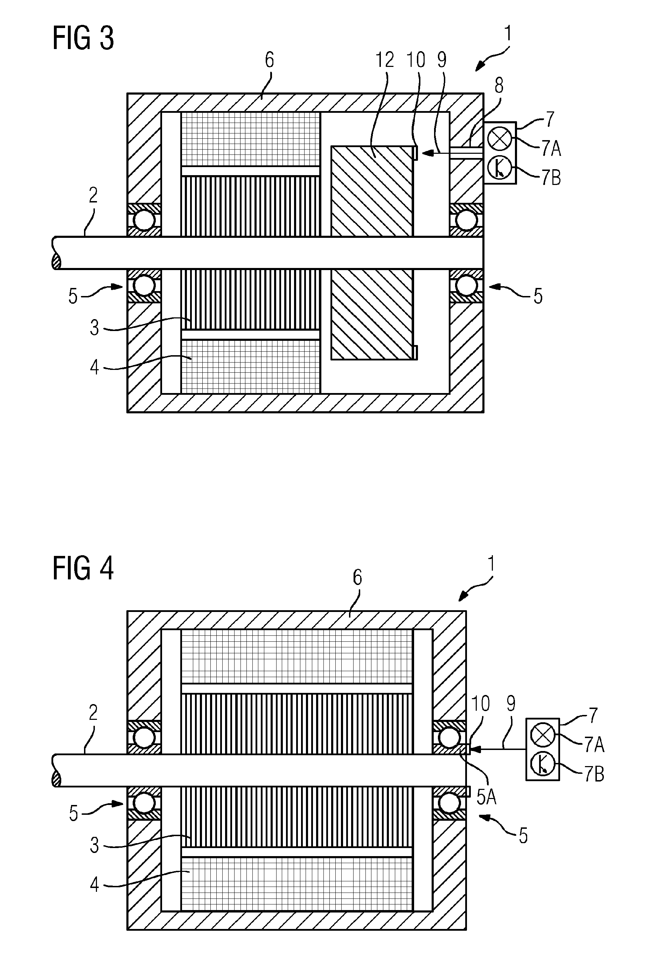

Bei dem Ausführungsbeispiel gemäß FIG 3 ist als wesentlicher Unterschied gegenüber dem Motor gemäß FIG 1 eine Läufer-Schwungmasse 12 vorhanden, die an der Motorwelle 2 befestigt ist und mit dem Läufer rotiert. Gemäß der Erfindung ist an der Läufer-Schwungmasse 12 ein Codeträger 10 angebracht, der mit einer Codespur versehen ist.

Alternativ ist es auch möglich, dass die Codespur direkt an der Läufer-Schwungmasse 12 angebracht wird. Die Läufer-Schwungmasse 12 übernimmt somit - neben ihrer üblichen Funktion im Motor - auch die Funktion des Codeträgers.

Bei dem Ausführungsbeispiel gemäß FIG 4 ist als wesentlicher Unterschied gegenüber dem Motor gemäß FIG 1 an einem Kugellagerinnenring 5A ein Codeträger 10 angebracht, der mit einer Codespur versehen ist.

Alternativ ist es auch möglich, dass die Codespur direkt an dem Kugellagerinnenring 5A angebracht wird. Der Kugellagerinnenring 5A übernimmt somit - neben seiner üblichen Funktion im Motor - auch die Funktion des Codeträgers.

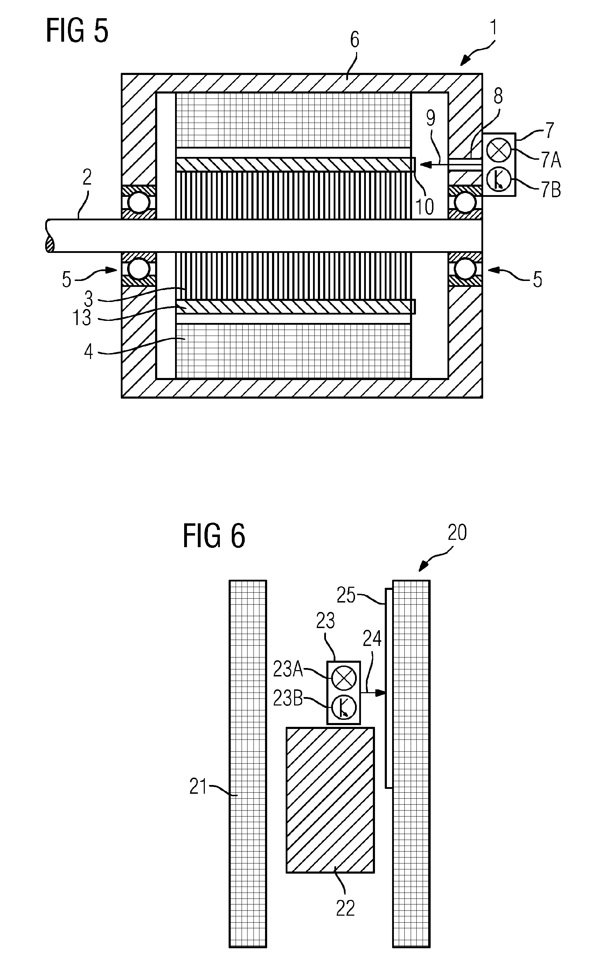

Ein weiteres Ausführungsbeispiel der Erfindung zeigt FIG 5. Daraus ist der Läufer eines Einbaumotors, der neben dem Läuferblechpaket 3 auch eine Hohlwelle 13 umfasst, ersichtlich. Gemäß der Erfindung ist an einer Stirnseite der Hohlwelle 13 ein Codeträger 10 angebracht, der mit einer Codespur versehen ist.

Alternativ ist es auch möglich, dass die Codespur direkt an der Stirnseite der Hohlwelle 13 angebracht wird. Die Hohlwelle 13 übernimmt somit - neben ihrer üblichen Funktion im Motor - auch die Funktion des Codeträgers.

Vorzugsweise sind die Drehgeber gemäß den vorherigen Ausführungsbeispielen als so genannte diffraktive Drehgeber ausgebildet, durch die nicht nur relative Winkeländerungen sondern auch Absolutbeträge von Drehwinkeln erfassbar sind.

Ein weiteres Ausführungsbeispiel der Erfindung zeigt FIG 6. Dabei ist der Motor als Linearmotor 20 mit einem Ständer 21 und einem relativ zu dem Ständer 21 verstellbaren Läufer 22 ausgebildet. Ferner sind in einem mit dem Läufer 22 verbundenen Gebergehäuse 23 eine Lichtquelle 23A, insbesondere ein Laser, sowie ein Lichtempfänger 23B untergebracht. Um die Position des Läufers 22 gegenüber dem Ständer 21 zu erkennen, ist an dem Ständer 21 ein Codeträger 25 angebracht, der mit einer Codespur versehen ist. Das von der Lichtquelle 23A erzeugte Licht 24 wird in Richtung des Codeträgers 25 gesendet und trifft auf den Codeträger 25 mit der Codespur. In Abhängigkeit von der aktuellen Position des Läufers 22 wird das auf den Codeträger 25 treffende Licht unterschiedlich gebeugt und reflektiert. Das reflektierte Licht gelangt schließlich zurück in das Gebergehäuse 23 und wird dort von dem Lichtempfänger 23B aufgenommen. Anhand des empfangenen Lichtes kann dann auf die aktuelle Position des Läufers des Motors 20 gegenüber dem Ständer 21 geschlossen werden.

Alternativ ist es auch möglich, dass die Codespur direkt an dem Ständer 21 angebracht wird. Der Ständer 21 übernimmt somit - neben seiner elektromagnetischen Funktion im Motor 20 - auch die Funktion des Codeträgers. Auch hier kann der Geber somit wesentlich kleiner gebaut werden im Vergleich zu einem Geber, bei dem sich auch der Codeträger mit in dem Gebergehäuse 23 befindet.

## Patentansprüche

1. Motor-Geber-System mit einem Motor (1, 20), der wenigstens ein feststehendes Motorteil und wenigstens ein relativ zu dem feststehenden Motorteil verstellbares Motorteil umfasst, und mit einem Geber, der eine Lichtquelle (7A, 23A), einen Codeträger mit einer Codespur (10, 25) und einen Lichtempfänger (7B, 23B) umfasst,
**dadurch gekennzeichnet, dass** die Lichtquelle (7A, 23A) und der Lichtempfänger (7B, 23B) fest mit dem feststehenden Motorteil verbunden sind und das verstellbare Motorteil als Codeträger (10, 25) mit der Codespur ausgebildet ist oder den Codeträger (10, 25) mit der Codespur trägt.

2. Motor-Geber-System nach Anspruch 1, wobei das verstellbare Motorteil als Läuferblechpaket (3) ausgebildet ist.

3. Motor-Geber-System nach Anspruch 1, wobei das verstellbare Motorteil als Läuferendscheibe (11) ausgebildet ist.

4. Motor-Geber-System nach Anspruch 1, wobei das verstellbare Motorteil als Läufer-Schwungmasse (12) ausgebildet ist.

5. Motor-Geber-System nach Anspruch 1, wobei das verstellbare Motorteil als Kugellagerinnenring (5A) eines Kugellagers (5) zur Lagerung eines Läufers des Motors (1) ausgebildet ist.

6. Motor-Geber-System nach Anspruch 1, wobei das verstellbare Motorteil als Hohlwelle (13) ausgebildet ist.

7. Motor-Geber-System nach einem der Ansprüche 1 bis 6, wobei der Geber als Drehgeber und insbesondere als diffraktiver Drehgeber ausgebildet ist.

8. Motor-Geber-System mit einem Linearmotor (20), der wenigstens einen Ständer (21) und wenigstens einen relativ zu dem Ständer (20) verstellbaren Läufer (22) umfasst, und mit einem Geber, der eine Lichtquelle (23A), einen Codeträger (25) mit einer Codespur und einem Lichtempfänger (23B) umfasst, **dadurch gekennzeichnet, dass** die Lichtquelle (23A) und der Lichtempfänger (23B) fest mit dem verstellbaren Läufer (22) verbunden sind und der Ständer (21) als Codeträger (25) mit der Codespur ausgebildet ist oder den Codeträger (25) mit der Codespur trägt.
